# EUROPÄISCHE PATENTSCHRIFT

(11) **EP 1 418 096 B1**
(45) Veröffentlichungstag und Bekanntmachung des Hinweises auf die Patenterteilung: **19.07.2006**
(21) Anmeldenummer: 03011468.0
(22) Anmeldetag: 20.05.2003
(51) Int. Cl.: B60R 21/26

(54) **Gassackmodul**
Airbag module
Module de coussin gonflable

(30) Priorität: 07.11.2002 GB 0225958
(43) Veröffentlichungstag der Anmeldung: 12.05.2004
(73) Patentinhaber: Delphi Technologies, Inc., Troy, MI 48007 (US)
(72) Erfinder: Guthke, Detlev, 58089 Hagen (DE); Maiwald, Helmut, 51515 Kürten (DE)
(74) Vertreter: Manitz, Finsterwald & Partner GbR

(56) Entgegenhaltungen:
- WO-A-00/32447
- DE-U- 20 105 734
- US-B1- 6 382 660
- PATENT ABSTRACTS OF JAPAN vol. 1999, no. 09, 30. Juli 1999 (1999-07-30) & JP 11 115667 A (TOYOTA MOTOR CORP), 27. April 1999 (1999-04-27)

## Beschreibung

Die Erfindung betrifft ein Gassackmodul mit einem Gassack und einem hiermit verbundenen Gasgenerator zum Aufblasen des Gassacks, nach dem Oberbegriff des Anspruchs 1 (vgl.US-A-6,382,660). Derartige Gassackmodule dienen zum Schutz der Passagiere von Kraftfahrzeugen, insbesondere als Seitenschutz. Beispielsweise können im Falle eines Unfalls vorbestimmte Seitenverzögerungs- oder - beschleunigungswerte, wie sie typischerweise bei einem Seitenaufprall auftreten, mittels geeigneter Sensoren detektiert werden. In Reaktion hierauf wird der Gasgenerator gezündet, um den hiermit verbundenen Gassack kurzzeitig aufzublasen. Der aufgeblasene Gassack bildet beispielsweise eine Art Vorhang und dient als Aufprallfläche für den betreffenden Passagier. Der Passagier wird somit vor Verletzungen geschützt.

Für einen solchen Passagierseitenschutz ist das Gassackmodul beispielsweise an der A- oder B-Säule oder in einer Mittenposition ("mid-mounted") montiert. Dabei besteht das Problem, dass für die Befestigung des Gassackmoduls wenig Platz zur Verfügung steht. Das Gassackmodul soll nämlich im Bereitschaftszustand - also bei zusammengefaltetem Gassack - die Bewegungsfreiheit des Passagiers nicht einschränken und optisch möglichst nicht wahrgenommen werden. Andererseits muss das Gassackmodul in der Nähe der gewünschten Position des aufgeblasenen Gassacks angeordnet sein.

Eine Aufgabe der Erfindung besteht deshalb darin, ein Gassackmodul zu schaffen, das eine Montage in einer platzoptimierten Anordnung an einem Fahrzeug insbesondere an einer Fahrzeugseite ermöglicht.

Diese Aufgabe wird durch ein Gassackmodul mit den Merkmalen des Anspruchs 11 gelöst.

Dieses Gassackmodul besitzt also ein Gasführungselement, das mit dem Gasgenerator verbunden ist. Bei einem Zünden des Gasgenerators nimmt das Gasführungselement das von dem Gasgenerator abgegebene Gas auf und leitet es an einer oder mehreren vorbestimmten Gasaustrittsöffnungen in den Gassack ein, um diesen aufzublasen. Der Gassack ist dabei mit dem Gasgenerator direkt oder indirekt verbunden, beispielsweise durch gasdichte Befestigung an dem Gasführungselement.

Bereits in dem Bereitschaftszustand des Gassackmoduls - also während der Gassack noch zusammengefaltet ist - ragt das Gasführungselement in den Gassack hinein. Das Gasführungselement ermöglicht somit das Einleiten von Gas in den Gassack an einer Stelle, die von der eigentlichen Gasauslassöffnung des Gasgenerators beabstandet ist. Das Gassackmodul kann somit auf besonders flexible Weise innerhalb des Fahrzeugs, insbesondere in der A- oder B-Säule oder in einer seitlichen Mittenposition montiert werden. Der Gasgenerator, der einen vergleichsweise großen Bestandteil des Gassackmoduls bildet, kann nämlich an einer Position vorgesehen sein, an der ausreichend Platz zur Verfügung steht. Der im zusammengefalteten Zustand vergleichsweise kleine Gassack dagegen kann im Bereitschaftszustand dennoch nahe der Position angeordnet sein, die der gewünschten Lage im aufgeblasenen Zustand entspricht.

Ein besonderer Vorteil des genannten Gasführungselements besteht darin, dass für diesen eine zusätzliche Formveränderung durch Zünden des Gasgenerators vorgesehen ist. Das Gasführungselement ist derartig plastisch oder elastisch verformbar, dass es - ähnlich dem zusammengefalteten Gassack - im Bereitschaftszustand sehr schmal und somit Platz sparend ausgebildet sein kann. Mit dem Erreichen eines gewissen Gasdrucks nach Zünden des Gasgenerators wird der durch das Gasführungselement gebildete Hohlraum expandiert, so dass nun eine schnelle Gasausbreitung innerhalb des Gasführungselements möglich ist.

Ein weiterer Vorteil ist, dass durch das Gasführungselement eine Richtungsänderung des Gasaustritts herbeigeführt werden kann. Die Richtung des Gasaustritts an der Gasaustrittsöffnung des Gasführungselements muss nämlich nicht der Richtung des Gasaustritts an dem Gasgenerator entsprechen. Durch die Ausrichtung der Gasaustrittsöffnung des Gasführungselements kann demgegenüber eine Richtung des Gasaustritts in den Gassack vorbestimmt werden, die für die Öffnungsbewegung des Gassacks während des Aufblasens besonders günstig ist.

Zusammengefasst besitzt das genannte Gasführungselement während des Bereitschaftszustands des Gassackmoduls eine Platz sparende Form mit einem geringen Volumen. Außerdem kann durch das Gasführungselement nicht nur der Ort, sondern auch die Richtung des Aufblasens des Gassacks unabhängig von der Lage des Gasgenerators in einer Weise beeinflusst werden, die den besonderen Bedingungen des jeweiligen Einsatzortes des Gassackmoduls entspricht. Das Gasführungselement dient dabei gleichzeitig als Einleitverlängerung und als Diffusor für das Verteilen des in den Gassack eingeleiteten Gases.

Um die erläuterte Aufgabe erfüllen zu können, ist das Gasführungselement durch eine Art Hohlkörper gebildet. Beispielsweise kann das Gasführungselement im Wesentlichen rohrförmig oder schlauchartig ausgebildet sein.

Es ist bevorzugt, wenn in dem Bereitschaftszustand des Gassackmoduls Gasaustrittsöffnungen an dem Gasführungselement noch nicht vollständig ausgebildet sind, sondern lediglich wenigstens eine Sollöffnungsstelle vorgesehen ist. Diese eine oder mehrere Sollöffnungsstellen werden also erst durch einen vom Gasgenerator erzeugten Gasdruck geöffnet und bilden hierdurch eine jeweilige Gasaustrittsöffnung für das Einleiten des Gases in den Gassack. Somit umschließt das Gasführungselement also - abgesehen von seiner Verbindung mit einer Gasauslassöffnung des Gasgenerators - einen geschlossenen Hohlraum. Erst durch Zünden des Gasgenerators und nach Erreichen eines vorbestimmten Mindestdrucks des hierdurch freigesetzten Gases wird die Sollöffnungsstelle für ein Austreten des Gases in den Gassack geöffnet.

Diese Bauweise hat den Vorteil, dass innerhalb des Gasgenerators und des Gasführungselements erst ein vorbestimmter Mindestdruck aufgebaut wird, bis die Sollöffnungsstelle oder die Sollöffnungsstellen sich öffnen und somit das eigentliche Aufblasen des Gassacks beginnen kann. Dadurch kann das Aufblasen des Gassacks besonders präzise gesteuert werden. Vor allem ist aufgrund des Aufbaus eines Mindestdrucks auch eine besonders präzise Steuerung der erläuterten Formveränderung des Gasführungselements möglich.

Alternativ zu der Ausgestaltung des Gasführungselements mit Sollöffnungsstellen kann das Gasführungselement bereits in dem Bereitschaftszustand des Gassackmoduls eine oder mehrere Gasaustrittsöffnungen besitzen. Mit anderen Worten kann das Gasführungselement bereits in dem betriebsbereiten Zustand mit der oder den Gasaustrittsöffnungen versehen sein, insbesondere an einem freien Ende des Gasführungselements.

Indem das Gasführungselement zum Zeitpunkt des Zündens des Gasgenerators noch komprimiert ist, ist der Zugang zu den Gasaustrittsöffnungen zunächst noch weitestgehend versperrt, so dass erst eine Expansion des Gasführungselements und danach eine verstärkte Gasabgabe erfolgt. Der für die zusätzliche Formveränderung des Gasführungselements erforderliche Gasdruck kann insbesondere auch dadurch verursacht werden, dass an den Gasaustrittsöffnungen oder innerhalb des Gasführungselements Engstellen vorgesehen sind, die zunächst eine Gasdurchströmung begrenzen und somit zum Aufbau eines Mindestdrucks innerhalb des Gasführungselements beitragen, und die sich nach Erreichen eines solchen Mindestdrucks erweitern, um eine höhere Gasdurchströmung zu ermöglichen.

Hinsichtlich der konstruktiven Ausgestaltung ist es bevorzugt, wenn das Gasführungselement an seinem freien Ende - also an seinem dem Gasgenerator abgewandten Ende - umgefaltet und der umgefaltete Abschnitt an einer Seitenfläche des Gasführungselements befestigt ist. Dadurch wird bei einem Druckanstieg beim Zünden des Gasgenerators die entsprechende Befestigungsstelle nur auf Zug belastet, und das freie Ende des Gasführungselements ist somit stabil gegenüber einem unbeabsichtigten Öffnen in axialer Richtung.

Beispielsweise kann das Gasführungselement aus einem rohrförmigen Hohlkörper gefertigt sein, wobei ein freies Ende des Hohlkörpers abgeflacht, umgefaltet und an einer Seitenfläche des abgeflachten Hohlkörpers entlang einer Befestigungsstelle befestigt ist, und wobei eine Sollöffnungsstelle oder eine Gasaustrittsöffnung seitlich an dem Gasführungselement, benachbart zu der genannten Befestigungsstelle vorgesehen ist. Insbesondere kann dieses Gasführungselement aus Metall gefertigt sein, wobei die genannte Befestigung durch eine Schweißnaht quer zu der Längsrichtung des Gasführungselements erfolgt, um ein unbeabsichtigtes Öffnen des Gasführungselements in axialer Richtung zu verhindern. Das Gasführungselement kann auch aus Kevlar, glasfaserverstärktem Kunststoff oder aus einem Gewebestoff gefertigt sein. In dem letztgenannten Fall ist das freie Ende zur Verstärkung umgenäht.

Alternativ hierzu kann das Gasführungselement aus einem flachen Ausgangsmaterial gefertigt sein, das entlang eines zentralen Falzes zusammengefaltet ist, wobei einander gegenüberliegende Seitenkanten des gefalteten Ausgangsmaterials zumindest abschnittsweise miteinander verbunden sind, so dass eine rohrförmige oder schlauchförmige Struktur gebildet ist. Dabei sind benachbart zu dem Falz die Gasaustrittsöffnung oder die Gasaustrittsöffnungen vorgesehen. Insbesondere kann als Ausgangsmaterial eine verformbare Metallplatte vorgesehen sein, die nach dem genannten Falten an den Seitenkanten verschweißt wird. Alternativ kann das Ausgangsmaterial aus Kevlar oder einem Gewebestoff bestehen.

Fertigungstechnisch ist es für die vorgenannten Ausführungsformen von Vorteil, wenn das Gasführungselement als ein separates Bauteil ausgebildet ist, das an dem Gasgenerator befestigt wird. Dadurch kann ein Gasgenerator mit Standardabmessungen oder mit Minimalabmessungen - je nach Anwendungsfall - wahlweise mit einem Gasführungselement einer gewünschten Form oder einer gewünschten Länge versehen werden. Es ist jedoch auch möglich, das Gehäuse des Gasgenerators und das oder die Gasführungselemente einstückig auszubilden.

Die Erfindung erstreckt sich auch auf ein Verfahren zur Herstellung eines Gasführungselements der erläuterten Art. Hierbei wird ein flaches Ausgangsmaterial entlang eines zentralen Falzes zusammengefaltet, und einander gegenüberliegende Seitenkanten des gefalteten Ausgangsmaterials werden zumindest abschnittsweise miteinander verbunden. Es ist wenigstens eine Sollöffnungsstelle oder eine Gasaustrittsöffnung an dem umgefalteten Ende des gebildeten Gasführungselements vorgesehen. Das Gasführungselement kann mit einem Gasgenerator verbunden werden, und auch ein Gassack kann derart mit dem Gasgenerator verbunden werden, dass das Gasführungselement mit seinem gefalteten Ende in den Gassack hineinragt.

Ferner betrifft die Erfindung auch die Verwendung eines Gassackmoduls der erläuterten Art für einen Passagierseitenschutz innerhalb eines Fahrzeugs.

Weitere Ausführungsformen der Erfindung sind in den Unteransprüchen genannt.

Die Erfindung wird nachfolgend beispielhaft unter Bezugnahme auf die Zeichnungen beschrieben.
- Fig. 1a: zeigt Teile eines Gassackmoduls im Bereitschaftszustand.
- Fig. 1b: zeigt eine Querschnittsansicht des Gassackmoduls.
- Fig. 1c: zeigt das Gassackmodul nach einer Expansion des Gasführungselements.
- Fig. 1d: zeigt das Gassackmodul nach dem Öffnen von zwei Gasaustrittsöffnungen.
- Fig. 1e: zeigt das Gasführungselement gemäß Fig. 1d in einer Perspektivansicht.
- Fig. 2: zeigt eine weitere Ausführungsform eines Gassackmoduls mit gekrümmtem Gasführungselement.
- Fig. 3: zeigt eine Ausführungsform eines Gassackmoduls mit geradlinigem Gasführungselement.
- Fig. 4a bis 4e: zeigen verschiedene Schritte während der Herstellung eines Gasführungselements.
- Fig. 5: zeigt dieses Gasführungselement nach einer Expansion.
- Fig. 6a bis 6e: zeigen verschiedene Schritte eines weiteren Herstellungsverfahrens.
- Fig. 7: zeigt einen alternativen Verfahrensschritt.
- Fig. 8a bis 8c: zeigen verschiedene Schritte während der Herstellung eines Gasführungselements gemäß einem weiteren Verfahren.

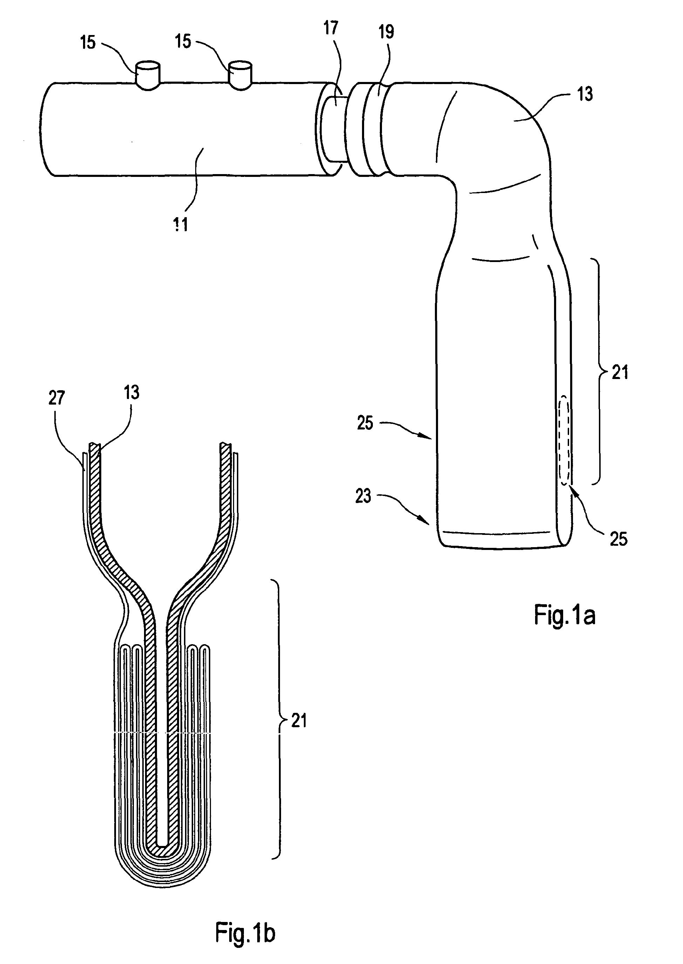

Fig. 1a zeigt ein Gassackmodul für einen Passagierseitenschutz innerhalb eines Fahrzeugs. Das Gassackmodul besitzt einen Gasgenerator 11, ein Gasführungselement 13 sowie einen Gassack, der in Fig. 1a der besseren Übersicht halber nicht gezeigt ist.

Der Gasgenerator 11 besitzt zwei radiale Befestigungsansätze 15 zur Befestigung des Gasgenerators 11 an dem Fahrzeug, beispielsweise im Bereich einer A- oder B-Säule oder in einer Mittenposition. Ferner besitzt der Gasgenerator 11 einen axialen Verbindungsansatz 17.

Das Gasführungselement 13 besteht aus einem duktilen Metall. Es ist um etwa 90° gekrümmt und besitzt somit eine L-Form. Der kurze Schenkel der L-Form ist rohrförmig ausgebildet und besitzt an seinem Ende eine Ringnut 19. Mit diesem Ende ist das Gasführungselement 13 auf den Verbindungsansatz 17 des Gasgenerators 11 in axialer Verlängerung aufgesetzt. Diese Verbindung kann beispielsweise mittels einer Schelle gesichert werden, die das Gasführungselement 13 entlang der Ringnut 19 umgreift.

Der lange Schenkel der L-Form des Gasführungselements 13 geht von einer Rohrform in einen abgeflachten Abschnitt eines im Wesentlichen rechteckigen Querschnitts über. Dieser abgeflachte Abschnitt wird nachfolgend als Expansionsabschnitt 21 bezeichnet. An dem freien Ende 23 des Gasführungselements 13 ist an den beiden einander gegenüberliegenden Schmalseiten jeweils eine Sollöffnungsstelle 25 vorgesehen.

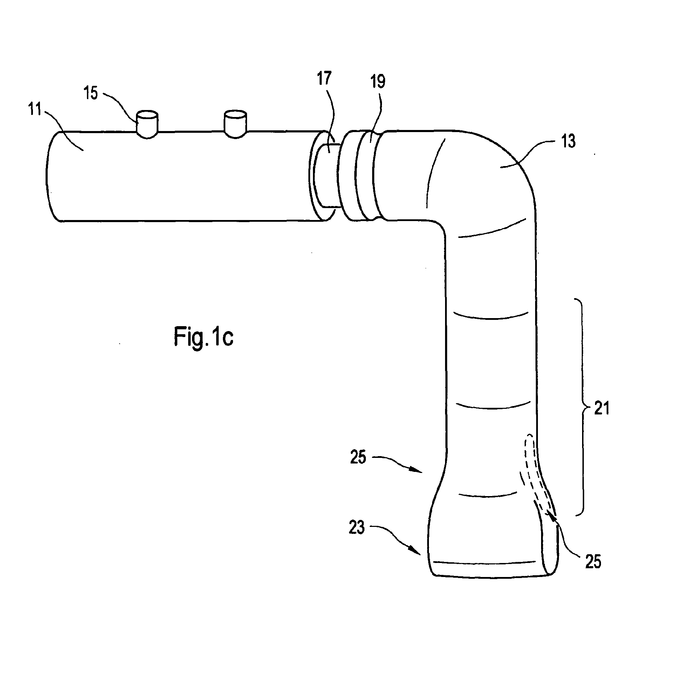

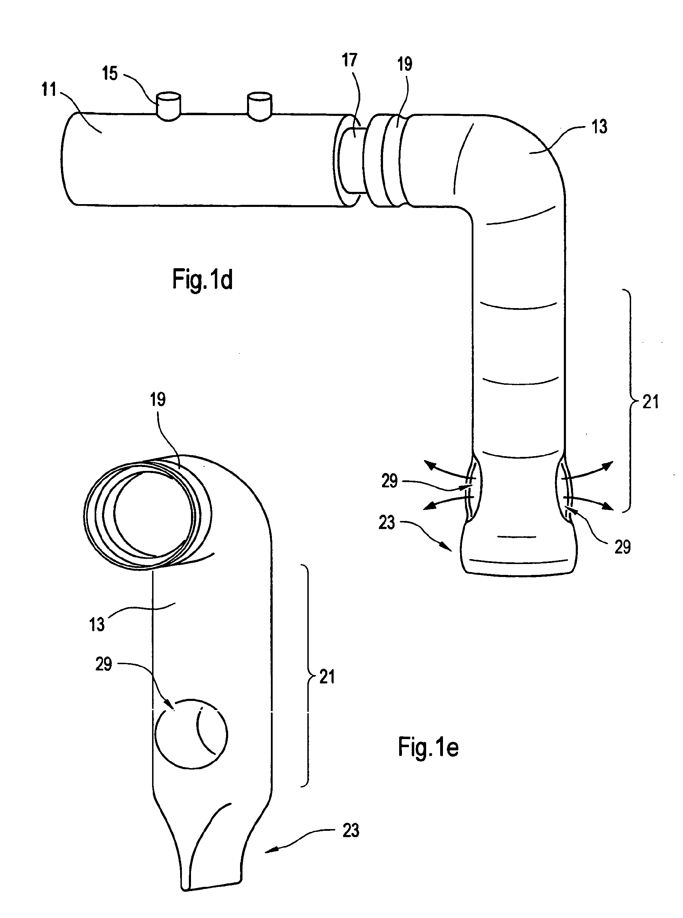

Das Gassackmodul gemäß Fig. 1 dient als Seitenschutz für Passagiere eines Fahrzeugs im Falle eines Seitenaufprallunfalls. Hierfür wird - auf an sich bekannte Weise - bei Detektion von vorbestimmten Seitenverzögerungs- oder -beschleunigungswerten der Gasgenerator 11 gezündet. Dieser stößt in sehr kurzer Zeit Gas zum Aufblasen des mit dem Gasgenerator 11 verbundenen Gassacks aus. Der aufgeblasene Gassack dient als beispielsweise vorhangartige Auffangfläche für den betreffenden Passagier.

Wesentlich ist, dass der Gasgenerator 11 zusätzlich mit dem Gasführungselement 13 versehen ist. Dieser sorgt für das Aufblasen des Gassacks an einer von dem Gasgenerator 11 entfernten Stelle sowie in einer gewünschten vorbestimmten Aufblasrichtung. Der Gasgenerator 11 muss somit nicht direkt an der Stelle montiert sein, an der sich der aufgeblasene Gassack erstrecken soll. Dies ist von praktischer Bedeutung, da der Gasgenerator 11 ein vergleichsweise großes Bauteil darstellt und er aufgrund seines Druckabgabevermögens auch an einer geschützten Stelle montiert werden soll.

Zu diesem Zweck ragt das Gasführungselement 13 in dem Bereitschaftszustand des Gassackmoduls gemäß Fig. 1a in den zusammengefalteten Gassack hinein. Fig. 1b zeigt diese Anordnung für den langen L-Schenkel des Gasführungselements 13. Ein Gassack 27 ist hier U-förmig und somit auf Platz sparende Weise um das Gasführungselement 13 gefaltet. Das Gasführungselement 13 ist auf diese Weise von dem Gassack 27 umhüllt. Der Gassack 27 ist mit dem Gasgenerator 11 direkt oder indirekt verbunden. Insbesondere ist es möglich, den Gassack 27 gemeinsam mit dem Gasführungselement 13 an der Ringnut 19 mittels einer Schellenverbindung an dem Verbindungsansatz 17 des Gasgenerators 11 gasdicht zu befestigen. Es ist jedoch auch möglich, den Gassack 27 an einer anderen Stelle des Gasführungselements 13 zu befestigen, beispielsweise in der Darstellung gemäß Fig. 1a oberhalb des Expansionsabschnitts 21.

Eine Besonderheit des Gasführungselements 13 gemäß Fig. 1a und 1b liegt in der Art und der zeitlichen Abfolge, nach der der Gassack 27 aufgeblasen wird, wie nachfolgend erläutert wird.

Sobald der Gasgenerator 11 gezündet wird, gibt dieser über den Verbindungsansatz 17 ein Gas in das Gasführungselement 13 ab. Der sich innerhalb des Gasführungselements 13 zunehmend aufbauende Gasdruck bewirkt eine Verformung entlang des Expansionsabschnitts 21. Der zuvor flach ausgebildete Expansionsabschnitt 21 nimmt somit eine rohrförmige Gestalt mit einem im Wesentlichen runden Querschnitt an. Fig. 1c zeigt diesen Zwischenzustand des Gasführungselements 13.

Während der Gasgenerator 11 den Gasdruck innerhalb des Gasführungselements 13 weiter erhöht, vergrößern sich auch die an dem freien Ende 23 des Gasführungselements 13 und an den Sollöffnungsstellen 25 wirkenden Verformungskräfte. Nach Erreichen eines Mindestdrucks öffnen sich die Sollöffnungsstellen 25, so dass diese nun jeweils eine Gasaustrittsöffnung 29 des Gasführungselements 13 bilden. Durch diese Gasaustrittsöffnungen 29 kann das von dem Gasgenerator 11 erzeugte Gas nun seitlich in den Gassack 27 entweichen, wie in Fig. 1d durch die Pfeile angedeutet ist. Der Gassack 27 wird nun also ausgehend von den Gasaustrittsöffnungen 29 mit hoher Geschwindigkeit aufgeblasen.

Fig. 1e zeigt das Gasführungselement 13 in dem nun erreichten Zustand Der Expansionsabschnitt 21 ist zu einer Rohrform vollständig expandiert, und die Sollöffnungsstellen 25 sind zu Gasaustrittsöffnungen 29 geöffnet. Das freie Ende 23 des Gasführungselements 13 ist in axialer Richtung verstärkt, so dass es sich trotz des aufgebauten Gasdrucks nicht unbeabsichtigt öffnet.

Ein besonderer Vorteil des Gassackmoduls gemäß Fig. 1a bis 1e besteht darin, dass das Gasführungselement 13 in dem Bereitschaftszustand entlang des Expansionsabschnitts 21 vergleichsweise flach ausgebildet sein kann, wie in Fig. 1a und 1b gezeigt ist. Dies erleichtert eine Platz sparende Unterbringung des Gasführungselements 13 an dem Fahrzeug. Dennoch wird im Falle eines Zündens des Gasgenerators 11 das Gasführungselement 13 auf einen Innendurchmesser vergrößert, wie für ein schnelles Aufblasen des Gassacks 27 erforderlich ist. Hierfür ist es von Bedeutung, dass die Sollöffnungsstellen 25 sich erst dann öffnen, nachdem der Expansionsabschnitt 21 sich aufgrund des vom Gasgenerator 11 erzeugten Gasdrucks bereits zu einem durchströmbaren Hohlkörper vergrößert hat.

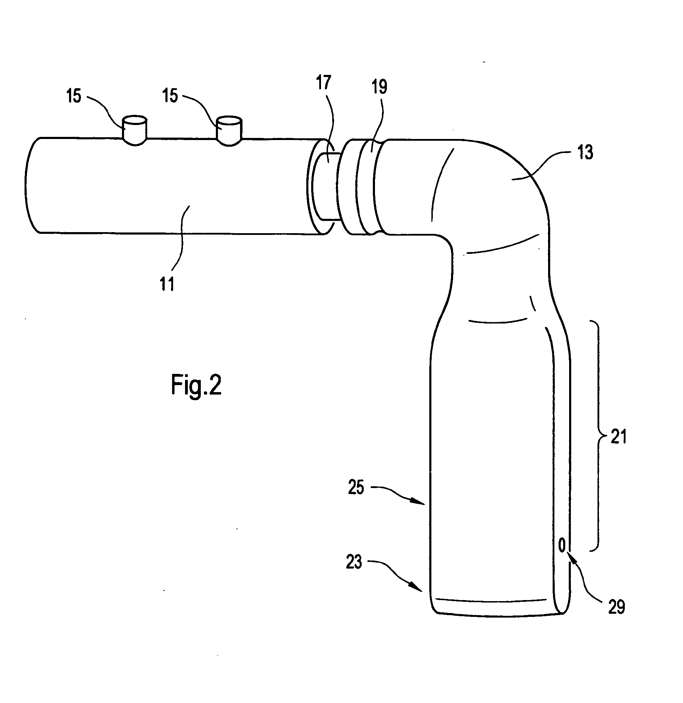

Fig. 2 zeigt eine alternative Ausführungsform eines Gasführungselements 13, bei der bereits im Bereitschaftszustand des Gassackmoduls Gasaustrittsöffnungen 29 ausgebildet sind. Diese sind jedoch so klein, dass der durch Zünden des Gasgenerators 11 erzeugte Gasdruck zunächst für eine Expansion des Gasführungselements 13 sorgt. Nach erfolgter Expansion wird der Gasdruck so groß, dass die Gasaustrittsöffnungen 29 sich erweitern und somit die erwünschte Durchströmung ermöglichen. Ein Vorteil dieser Ausführungsform besteht darin, dass mit dem Zünden des Gasgenerators 11 sofort ein gewisses Aufblasen und Entfalten des Gassacks erfolgt, also bereits bevor das Gasführungselement 13 vollständig expandiert ist.

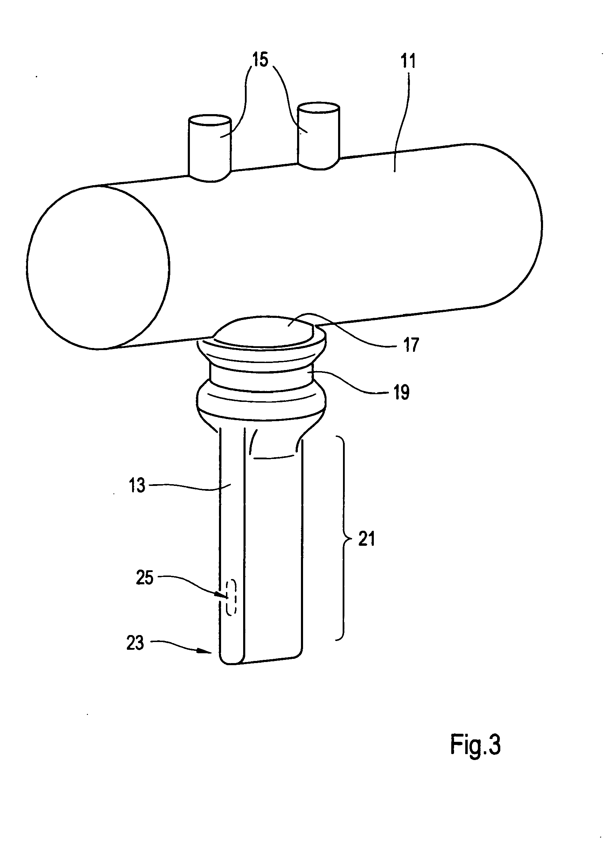

Fig. 3 zeigt eine weitere Ausführungsform eines Gassackmoduls, bei der das Gasführungselement 13 geradlinig ausgebildet ist und an den Gasgenerator 11 in einer radialen Anordnung befestigt ist. Auch bei dieser Ausführungsform können seitliche Sollöffnungsstellen 25 vorgesehen sein.

Es ist jedoch auch möglich, anstelle der Sollöffnungsstellen 25 vorgefertigte Gasaustrittsöffnungen vorzusehen, wie anhand Fig. 2 bereits erläutert.

Zu den erläuterten Ausführungsformen ist noch anzumerken, dass das Gasführungselement 13 auch mehrteilig ausgebildet sein kann. Ferner kann der jeweilige Gasgenerator 11 auch mit mehreren Gasführungselementen 13 versehen sein, um gleichzeitig mehrere Gassäcke 27 oder einen Gassack 27 an mehreren Stellen aufblasen zu können.

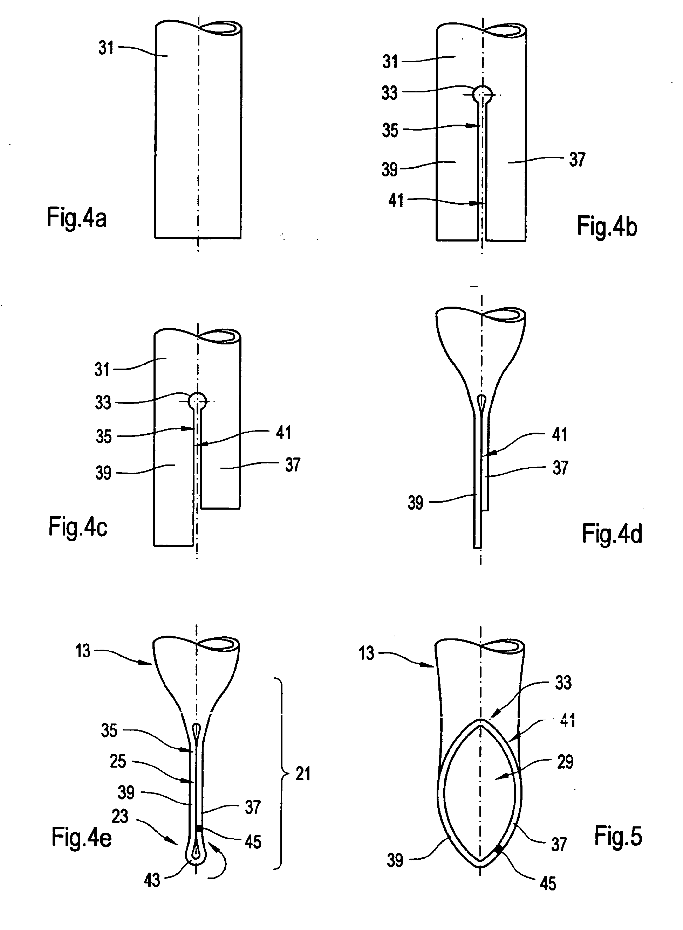

Fig. 4a bis 4e zeigen ein mögliches Verfahren zur Herstellung eines Gasführungselements 13. Hierfür wird zunächst ein rohrabschnittförmiger Hohlkörper 31 aus Metall abgelängt (Fig. 4a). Anschließend werden in den Hohlkörper 31 eine diametrale Bohrung 33 und ein hieran mündender diametraler Längsschlitz 35 angebracht (Fig. 4b). Dadurch entstehen zwei parallele Schenkel 37, 39 mit jeweiligen Seitenkanten 41. Der eine Schenkel 37 wird gekürzt (Fig. 4c), und beide Schenkel 37, 39 werden abgeflacht (Fig. 4d).

Danach wird der längere Schenkel 39 in Richtung des kürzeren Schenkels 37 umgefaltet, so dass ein Falz 43 gebildet ist. Der umgefaltete Schenkel 39 wird nun mittels einer Schweißnaht 45 an dem kürzeren Schenkel 37 verschweißt (Fig. 4e).

Bei dem somit gebildeten Gasführungselement 13 bilden die beiden abgeflachten Schenkel 37, 39 einen Expansionsabschnitt 21. Die Seitenkanten 41 der beiden Schenkel 37, 39 liegen aneinander an, so dass hierdurch an den beiden Seiten der Schenkel 37, 39 jeweils eine Sollöffnungsstelle 25 gebildet ist.

Fig. 5 zeigt das somit hergestellte Gasführungselement 13 nach Expansion aufgrund des Gasdrucks eines verbundenen Gasgenerators. Die beiden seitlichen Längsschlitze 35 sind nun zu einer ovalen Gasaustrittsöffnung 29 erweitert. Die Einleitung der Spannungsspitzen während der Expansion erfolgt an der Bohrung 33. Die Schweißnaht 45 ist während der Expansion des Hohlkörpers 31 ausschließlich einer Zugbeanspruchung ausgesetzt, so dass es am Ort der Schweißnaht 45 nicht zu einem unbeabsichtigten Aufreißen des Gasführungselements 13 infolge des Zündens des Gasgenerators kommt.

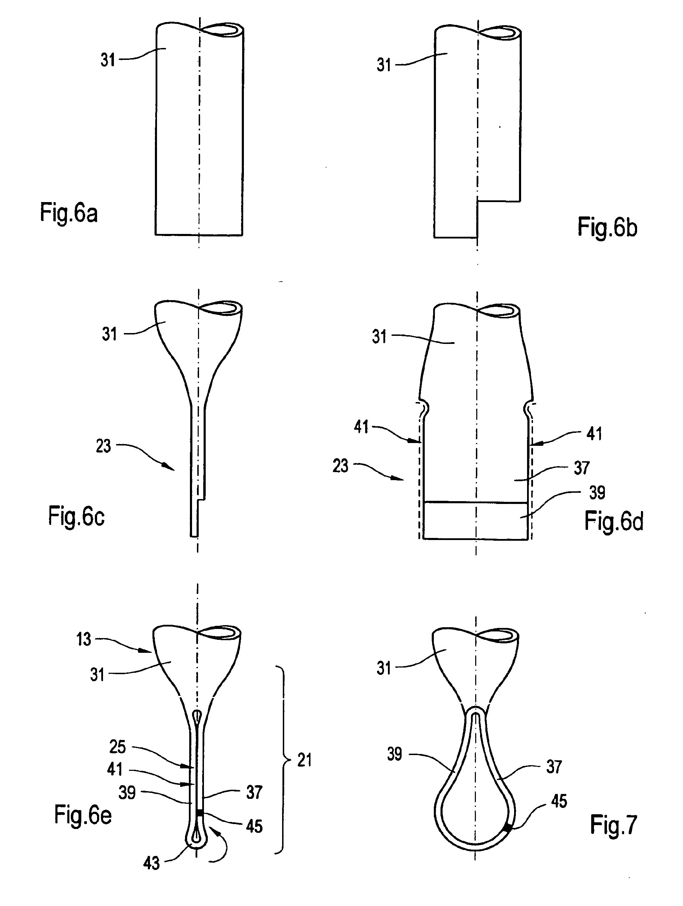

Fig. 6a bis 6e zeigen ein alternatives Verfahren zur Herstellung eines Gasführungselements 13. Auch hier wird zunächst ein Hohlkörper 31 abgelängt (Fig. 6a). Danach wird ein halbzylinderförmiges Endsegment aus dem Hohlkörper 31 ausgeklinkt (Fig. 6b). Anschließend wird das betreffende Ende 23 des Hohlkörpers 31 abgeflacht (Fig. 6c).

Das abgeflachte Ende 23 des Hohlkörpers 31 wird nun an beiden Seiten beschnitten, so dass ein kurzer Schenkel 37 und ein langer Schenkel 39 gebildet sind, wobei die Seitenkanten 41 der beiden Schenkel 37, 39 direkt aneinander anliegen (Fig. 6d). Der lange Schenkel 39 wird in Richtung des kurzen Schenkels 37 umgefaltet, so dass wiederum ein Falz 43 gebildet ist. Anschließend wird der lange Schenkel 39 an dem kurzen Schenkel 37 verschweißt, wobei die Schweißnaht 45 quer zu der Längsrichtung des somit gebildeten Gasführungselements 13 verläuft (Fig. 6e).

Auch bei diesem Gasführungselement 13 bilden die beiden aneinander anliegenden Schenkel 37, 39 einen Expansionsabschnitt 21, wobei die aneinander anliegenden Seitenkanten 41 zwei Sollöffnungsstellen 25 bilden. Die Schweißnaht 45 verläuft seitlich an dem gebildeten Gasführungselement 13, so dass bei einer Expansion des Gasführungselements 13 nur eine Zugbeanspruchung auf die Schweißnaht 45 ausgeübt wird, wie im Zusammenhang mit Fig. 5 bereits erläutert.

Fig. 7 illustriert, dass anstelle eines Abflachens und anschließenden Umfaltens der Schenkel 37, 39 gemäß Fig. 4d und 4e bzw. Fig. 6c bis 6e auch zuerst ein Aufeinanderbiegen der beiden Schenkel 37, 39 erfolgen kann, wobei die Schenkel 37, 39 danach miteinander verschweißt und erst anschließend abgeflacht werden.

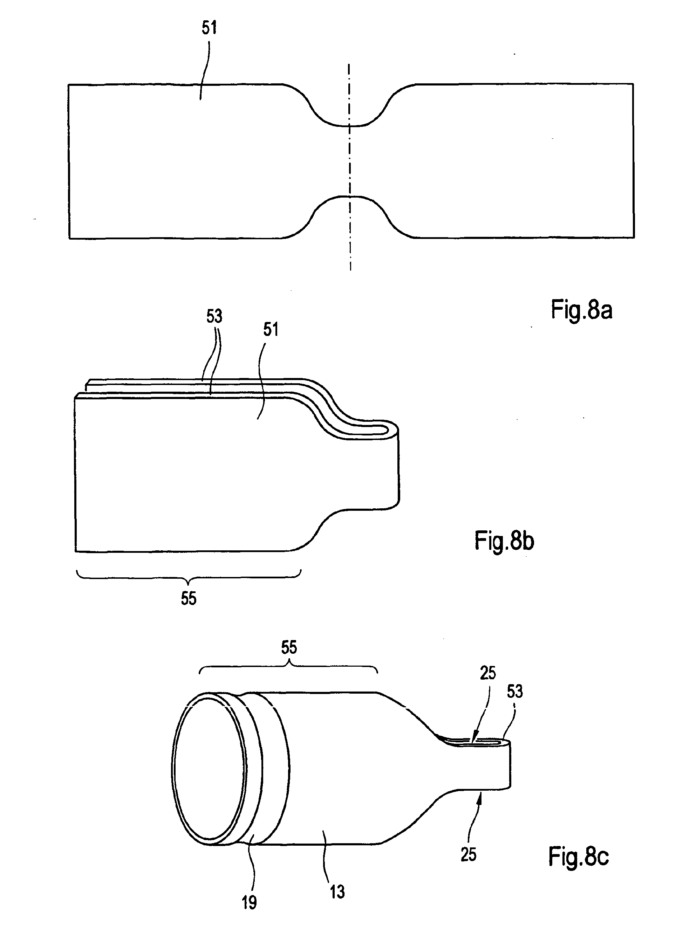

Fig. 8a bis 8c zeigen ein weiteres Verfahren zur Herstellung eines Gasführungselements 13.

Hier wird eine H-förmige Metallplatte entlang ihrer zentralen Symmetrieachse umgefaltet, so dass Seitenkanten 53 der Metallplatte 51 sich einander gegenüberliegen (Fig. 8a und 8b).

Diese Anordnung wird abgeflacht, und die somit aneinander anliegenden Seitenkanten 53 werden entlang eines Verbindungsabschnitts 55 dauerhaft miteinander verbunden, nämlich verschweißt. Außerdem wird die somit gebildete Tasche an ihrem offenen Ende zu einer rohrförmigen Gestalt umgeformt und mit einer Ringnut 19 versehen. Auf diese Weise sind an dem geschlossenen Ende der Taschenform, an dem die Seitenkanten 53 nicht miteinander verschweißt sind, zwei seitliche Sollöffnungsstellen 25 gebildet (Fig. 8c). Eine nachfolgend an der Ringnut 19 angebrachte Schelle kann die genannten Schweißverbindungen verstärken.

Zu dem Herstellungsverfahren gemäß Fig. 8a bis 8c ist noch anzumerken, dass alternativ oder zusätzlich zu den Sollöffnungsstellen 25 auch zwei Gasaustrittsöffnungen vorgesehen sein können, die bereits vor der Expansion des Gasführungselements 13 seitlich geöffnet sind.

### Bezugszeichenliste

- 11: Gasgenerator
- 13: Gasführungselement
- 15: Befestigungsansatz
- 17: Verbindungsansatz
- 19: Ringnut
- 21: Expansionsabschnitt
- 23: freies Ende
- 25: Sollöffnungsstelle
- 27: Gassack
- 29: Gasaustrittsöffnung
- 31: Hohlkörper
- 33: Bohrung
- 35: Längsschlitz
- 37: Schenkel
- 39: Schenkel
- 41: Seitenkante
- 43: Falz
- 45: Schweißnaht
- 51: Metallplatte
- 53: Seitenkante
- 55: Verbindungsabschnitt

## Patentansprüche

1. Gassackmodul mit einem Gassack (27) und einem hiermit verbundenen Gasgenerator (11) zum Aufblasen des Gassacks,
wobei in einem Bereitschaftszustand des Gassackmoduls der Gassack zusammengefaltet ist, wobei
der Gasgenerator (11) mit wenigstens einem Gasführungselement (13) versehen ist, das aus einem verformbaren Material gefertigt ist,
wobei in dem Bereitschaftszustand des Gassackmoduls das Gasführungselement (13) zumindest entlang eines Expansionsabschnitts (21) abgeflacht ausgebildet ist und zwischen wenigstens zwei Falten des zusammengefalteten Gassacks (27) hineinragt, und
wobei durch einen vom Gasgenerator (11) erzeugten Gasdruck der Expansionsabschnitt (21) zu einem durchströmbaren Hohlkörper expandierbar ist,
**dadurch gekennzeichnet, dass**
in dem Bereitschaftszustand des Gassackmoduls der Gassack (27) U-förmig um das Gasführungselement (13) gefaltet ist.

2. Gassackmodul nach Anspruch 1,
**dadurch gekennzeichnet,**
**dass** in dem Bereitschaftszustand des Gassackmoduls das Gasführungselement (13) wenigstens eine Sollöffnungsstelle (25) aufweist, die durch einen vom Gasgenerator (11) erzeugten Gasdruck geöffnet werden kann und nach dem Öffnen wenigstens eine Gasaustrittsöffnung (29) bildet.

3. Gassackmodul nach Anspruch 1,
**dadurch gekennzeichnet,**
**dass** in dem Bereitschaftszustand des Gassackmoduls wenigstens eine Gasaustrittsöffnung (29) an dem Gasführungselement (13) ausgebildet ist.

4. Gassackmodul nach Anspruch 1,
**dadurch gekennzeichnet,**
**dass** das Gasführungselement (13) aus einem rohrförmigen Hohlkörper (31) gefertigt ist, wobei ein freies Ende (23) des Hohlkörpers umgefaltet ist.

5. Gassackmodul nach Anspruch 1,
**dadurch gekennzeichnet,**
**dass** das Gasführungselement (13) aus einem rohrförmigen Hohlkörper (31) gefertigt ist,
wobei ein freies Ende des Hohlkörpers abgeflacht, umgefaltet und an einer Seitenfläche des abgeflachten Hohlkörpers (31) entlang einer Befestigungsstelle (45) befestigt ist, und
wobei an dem freien Ende des Hohlkörpers wenigstens eine Sollöffnungsstelle (25) oder Gasaustrittsöffnung (29) ausgebildet ist.

6. Gassackmodul nach Anspruch 5,
**dadurch gekennzeichnet,**
**dass** die Befestigungsstelle (45) quer zu der Längsrichtung des abgeflachten Hohlkörpers (31) verläuft,
und/oder
**dass** die Befestigungsstelle durch eine Schweißnaht (45) gebildet ist,
und/oder
**dass** zwei Schenkel (37, 39) des abgeflachten Hohlkörpers (31) aneinander anliegen und dabei wenigstens eine Sollöffnungsstelle (25) oder Gasaustrittsöffnung (29) begrenzen.

7. Gassackmodul nach Anspruch 1,
**dadurch gekennzeichnet,**
**dass** das Gasführungselement (13) aus einem flachen Ausgangsmaterial (51) gefertigt ist, das entlang eines zentralen Falzes zusammengefaltet ist,
wobei einander gegenüber liegende Seitenkanten (53) des gefalteten Ausgangsmaterials (51) zumindest abschnittsweise (55) miteinander verbunden sind, und
wobei benachbart zu dem Falz wenigstens eine Sollöffnungsstelle (25) oder Gasaustrittsöffnung (29) vorgesehen ist.

8. Gassackmodul nach Anspruch 1,
**dadurch gekennzeichnet,**
**dass** wenigstens eine Sollöffnungsstelle (25) oder Gasaustrittsöffnung (29) seitlich an dem Gasführungselement (13) angeordnet ist,
und/oder
**dass** das Gasführungselement (13) mehrere Sollöffnungsstellen (25) oder Gasaustrittsöffnungen (29) aufweist, insbesondere zwei in einer Gegenüberstellung.

9. Gassackmodul nach Anspruch 1,
**dadurch gekennzeichnet,**
**dass** das Gasführungselement (13) aus Metall, Kevlar oder einem Gewebestoff gefertigt ist.

10. Verfahren zur Herstellung eines Gasführungselements (13),
**dadurch gekennzeichnet,**
**dass** ein flaches Ausgangsmaterial (51) entlang eines zentralen Falzes zusammengefaltet wird und einander gegenüber liegende Seitenkanten (53) des gefalteten Ausgangsmaterials zumindest abschnittsweise (55) miteinander verbunden werden, wobei wenigstens eine Sollöffnungsstelle (25) oder Gasaustrittsöffnung (29) benachbart zu dem Falz vorgesehen ist.

## Claims

1. An airbag module comprising an airbag (27) and a gas generator (11) connected hereto for the inflation of the airbag,
wherein the airbag is folded together in a stand-by condition of the airbag module,
wherein the gas generator (11) is provided with at least one gas conducting element (13) made from a deformable material,
wherein the gas conducting element (13) is flattened at least along an expansion section (21) in the stand-by condition of the airbag module and projects between at least two folds of the folded together air bag (27), and
wherein the expansion section (21) can be expanded to a hollow body through which flow can occur by a gas pressure produced by the gas generator (11)
**characterized in that**
the airbag (27) is folded in a U shape around the gas conducting element (13) in the stand-by condition of the airbag module.

2. An airbag module in accordance with claim 1, **characterized in that** the gas conducting element (13) has at least one desired opening position (25) in the stand-by condition of the airbag module, said desired opening position being able to be opened by a gas pressure produced by the gas generator (11) and forming at least one gas discharge opening (29) after the opening.

3. An airbag module in accordance with claim 1, **characterized in that** at least one gas discharge opening (29) is formed at the gas conducting element (13) in the stand-by condition of the airbag module.

4. An airbag module in accordance with claim 1, **characterized in that** the gas conducting element (13) is made of a tubular hollow body (31), with a free end (23) of the hollow body being folded over.

5. An airbag module in accordance with claim 1, **characterized in that** the gas conducting element (13) is made from a tubular hollow body (31),
wherein a free end of the hollow body is flattened, folded over and fastened along a fastening position (45) to a side area of the flattened hollow body (31); and
wherein at least one desired opening position (25) or gas discharge opening (29) is formed at the free end of the hollow body.

6. An airbag module in accordance with claim 5, **characterized**
**in that** the fastening position (45) extends transversely to the elongate direction of the flattened hollow body (31); and/or
**in that** the fastening position is formed by a weld seam (45); and/or
**in that** two limbs (37, 39) of the flattened hollow body (31) contact one another and bound at least one desired opening position (25) or gas discharge opening (29).

7. An airbag module in accordance with claim 1, **characterized in that** the gas conducting element (13) is made of a flat starting material (51) folded together along a central fold,
wherein side edges (53) of the folded starting material (51) lying opposite one another are connected to one another at least section-wise (55), and
wherein at least one desired opening position (25) or gas discharge opening (29) is provided adjacent to the fold.

8. An airbag module in accordance with claim 1, **characterized**
**in that** at least one desired opening position (25) or gas discharge opening (29) is arranged laterally at the gas conducting element (13); and/or
**in that** the gas conducting element (13) has a plurality of desired opening positions (25) or gas discharge openings (29), in particular two in a confronting position.

9. An airbag module in accordance with claim 1, **characterized in that** the gas conducting element (13) is made of metal, Kevlar or a fabric.

10. A method for the manufacture of a gas conducting element (13), **characterized in that** a flat starting material (51) is folded together along a central fold and side edges (53) of the folded starting material lying opposite one another are connected to one another at least section-wise, with at least one desired opening position (25) or gas discharge opening (29) being provided adjacent to the fold.

## Revendications

1. Module de coussin gonflable comportant un coussin gonflable (27) et un générateur de gaz (11) relié à celui-ci afin de gonfler le coussin gonflable ;
dans lequel, dans un état d'attente du module de coussin gonflable, le coussin gonflable est replié ; dans lequel,
le générateur de gaz (11) est doté d'au moins un élément de guidage du gaz (13), qui est fabriqué à partir d'un matériau déformable,
dans lequel, dans l'état d'attente du module de coussin gonflable, l'élément de guidage du gaz (13) est configuré de manière aplatie au moins le long d'une section dilatable (21) et pénètre entre au moins deux plis du coussin gonflable replié (27),
et dans lequel, sous l'effet de la pression de gaz produite par un générateur de gaz (11), la section dilatable (21) est dilatable en un corps creux pouvant être traversé, **caractérisé en ce que**, dans l'état d'attente du module de coussin gonflable, le coussin gonflable (27) est plié en forme de U autour de l'élément de guidage du gaz (13).

2. Module de coussin gonflable selon la revendication 1, **caractérisé en ce que**, dans l'état d'attente du module de coussin gonflable, l'élément de guidage du gaz (13) présente au moins un emplacement d'ouverture (25), qui peut être ouvert sous l'effet d'une pression de gaz produite par le générateur de gaz (11), et forme au moins une ouverture d'évacuation du gaz (29) après l'ouverture.

3. Module de coussin gonflable selon la revendication 1, **caractérisé en ce que**, dans l'état d'attente du module de coussin gonflable, au moins une ouverture d'évacuation du gaz (29) est formée sur l'élément de guidage du gaz (13).

4. Module de coussin gonflable selon la revendication 1, **caractérisé en ce que** l'élément de guidage du gaz (13) est fabriqué à partir d'un corps creux (31) tubulaire, dans lequel une extrémité libre (23) du corps creux est pliée.

5. Module de coussin gonflable selon la revendication 1, **caractérisé en ce que** l'élément de guidage du gaz (13) est fabriqué à partir d'un corps creux (31) tubulaire,
dans lequel une extrémité libre du corps creux est aplatie, pliée et fixée sur une surface latérale du corps creux (31) aplati le long d'un emplacement de fixation (45) et,
dans lequel, à l'extrémité libre du corps creux, au moins un emplacement d'ouverture (25) ou une ouverture d'évacuation de gaz (29) est ménagée.

6. Module de coussin gonflable selon la revendication 5, **caractérisé en ce que**,
l'emplacement de fixation (45) est transversal par rapport à la direction longitudinale du corps creux (31) aplati,
et/ou
**en ce que** l'emplacement de fixation est formé par un cordon de soudure (45),
et/ou
**en ce que** deux branches (37, 39) du corps creux aplati (31) sont adjacentes l'une à l'autre et délimitent donc au moins un emplacement d'ouverture (25) ou une ouverture d'évacuation du gaz (29).

7. Module de coussin gonflable selon la revendication 1, **caractérisé en ce que**,
l'élément de guidage du gaz (13) est fabriqué à partir d'un produit de départ (51) plat, qui est replié le long d'un pli central,
dans lequel les bords latéraux (53) opposés du produit de départ plié (51) sont reliés l'un à l'autre au moins section par section (55), et
dans lequel, à proximité du pli, il est prévu au moins un emplacement d'ouverture (25) ou une ouverture d'évacuation du gaz (29).

8. Module de coussin gonflable selon la revendication 1, **caractérisé en ce que**,
au moins un emplacement d'ouverture (25) ou une ouverture d'évacuation de gaz (29) est disposée latéralement sur l'élément de guidage du gaz (13),
et/ou
**en ce que** l'élément de guidage du gaz (13) comporte plusieurs emplacements d'ouverture (25) ou ouvertures d'évacuation de gaz (29), en particulier deux en vis à vis.

9. Module de coussin gonflable selon la revendication 1, **caractérisé en ce que** l'élément de guidage du gaz (13) est fabriqué à partir de métal, Kevlar ou d'une matière tissée.

10. Procédé de fabrication d'un élément de guidage du gaz (13), **caractérisé en ce qu'**un produit de départ plat (51) est replié le long d'un pli central, et les bords latéraux opposés (53) du produit de départ plié sont reliés l'un à l'autre au moins section par section (55), dans lequel au moins un emplacement d'ouverture (25) ou une ouverture d'évacuation de gaz (29) est prévue de manière adjacente au pli.
